Europäisches Patentamt

European Patent Office

Office européen des brevets

(19)

(11) Veröffentlichungsnummer: **0 117 546**
**B1**

(12) **EUROPÄISCHE PATENTSCHRIFT**

(45) Veröffentlichungstag der Patentschrift :
03.01.90

(51) Int. Cl.⁵: **C 02 F   3/20**, C 02 F   3/12

(21) Anmeldenummer : 84101947.4

(22) Anmeldetag : 24.02.84

(54) Belüftungsvorrichtung für die Abwasserreinigung.

(30) Priorität : 26.02.83 DE 3306831

(43) Veröffentlichungstag der Anmeldung :
05.09.84 Patentblatt 84/36

(45) Bekanntmachung des Hinweises auf die Patenterteilung : 03.01.90 Patentblatt 90/01

(84) Benannte Vertragsstaaten :
AT BE CH DE FR GB IT LI LU NL SE

(56) Entgegenhaltungen :
DE—A— 1 932 171
DE—A— 2 901 331
FR—A— 2 449 658
GB—A— 2 077 712
US—A— 2 308 866
US—A— 3 926 808

(73) Patentinhaber : Gebert, Heinz, Dipl.-Ing.
August-Lutz-Strasse 3
D-8867 Oettingen (DE)

(72) Erfinder : Gebert, Heinz, Dipl.-Ing.
August-Lutz-Strasse 3
D-8867 Oettingen (DE)
Erfinder : Seebauer, Rudolf
Händlstrasse 3
D-8501 Schwarzenbruck (DE)

(74) Vertreter : Vossius & Partner
Siebertstrasse 4 P.O. Box 86 07 67
D-8000 München 86 (DE)

EP 0 117 546 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft eine Belüftungsvorrichtung für die Abwasserreinigung, einen insbesondere für eine derartige Belüftungsvorrichtung geeigneten Belüftungsturm zum Sauerstoffeintrag in das Abwasser und ein Verfahren zum Belüften von Abwasser gemäß dem Oberbegriff der Ansprüche 1, 6 bzw. 10.

Die moderne Abwasserreinigung, insbesondere auch die Reinigung kommunalen Abwassers, erfolgt meist in mehrstufigen Kläranlagen, die eine mechanische Vorklärstufe und eine chemische und/oder biologische Nachklärstufe aufweisen ; es gibt jedoch auch noch eine große Anzahl meist älterer, einstufiger Kläranlagen, die lediglich eine mechanische Klärstufe aufweisen.

Bei Kläranlagen mit mechanischer Vorklärstufe und biologlischer Nachklärstufe werden die nach der mechanischen Reinigung noch im Abwasser enthaltenen Schmutz- oder Fremdstoffe, vor allem die gelösten und kolloidalen unstabilen, fäulnisfähigen Stoffe, in einer nachgeschalteten biologischen Nachklärstufe entfernt und aufgearbeitet. Dies erfolgt aerob unter ausreichender Luft- und Sauerstoffzufuhr infolge physikalischer, biologischer und bakteriologischer Vorgänge.

Für die biologische Abwasserreinigung werden deshalb Belüftungsvorrichtungen benötigt, die Luftsauerstoff in das vorgereinigte Abwasser eintragen. Nur bei einer ausreichenden Belüftung wird in der biologischen Stufe belebter Schlamm gebildet, der die gelösten Schmutz- und Fremdstoffe bindet und aufarbeitet ; durch Sauerstoffmangel wird der biologische Abbau der Schmutzstoffe behindert oder sogar ganz unterbunden. Derartige Belüftungsvorrichtungen werden insbesondere bei durchflossenen Faulräumen eingesetzt, wie beispielsweise von E. Ottmann in « Berichte aus der Wassergütewirtschaft », Nr. 15/DK 628.35 beschrieben.

Als Belüftungsvorrichtungen für den Sauerstoffeintrag werden neben Versprühgeräten und Belüftungswalzen oder Belüftungsscheiben insbesondere auch sogenannte « Tropfkörper » eingesetzt. Tropfkörperanlagen bestehen meist aus zu einem Turm von mehreren Metern Höhe aufgeschichtetem, porösem Material, wie porösen Steinen, auf dessen Oberfläche das zu reinigende Abwasser mittels eines Drehsprengers fein verteilt wird. Auf der Oberfläche soll sich dann ein biologischer Rasen ausbilden, in dem die das Abwasser reinigenden Bakterien und Kleinlebewesen ansiedeln. Bei der Reinigung werden die abbaubaren Verunreinigungen in feste Schlammstoffe umgewandelt ; das gereinigte Abwasser gelangt in den Vorfluter. Beim Belebtschlammverfahren schweben die Bakterien nicht ortsgebunden, sondern gemeinsam mit dem Belebtschlamm frei im Abwasser.

Die bekannten Tropfkörperanlagen sind voluminöse, viel Platz beanspruchende Bauwerke, die erhebliche Baukosten und Wartungsarbeiten erfordern. Auch eine Nachrüstung bestehender mechanischer Kläranlagen mit einer biologischen Klärstufe ist mit bekannten Tropfkörperanlagen sehr teuer und häufig, insbesondere infolge Platzmangels, nicht zu realisieren. Zudem vereisen die bekannten Tropfkörperanlagen bei starkem Frost, und der Luftsauerstoffeintrag und damit die Reinigungsleistung gehen mit fallender Temperatur zurück. Auch Versprühungen mit rotierenden Körpern haben dieselben Nachteile. Der Energieaufwand ist hierbei wegen der großen zu bewegenden Massen erheblich.

Die DE-A-2 901 331 beschreibt eine Abwasserreinigungsanlage, bei der eine Pumpvorrichtung, eine Abwasser-Luft-Mischvorrichtung und ein Belüftungsturm hintereinander geschaltet sind. Diese drei Einheiten sind getrennt voneinander angeordnet.

Aus der FR-A-2 449 658 ist eine Anlage bekannt, bei der das Ansaugrohr einer an den Belüftungsturm angeschlossenen Förderpumpe niedriger liegt als der Auslaß eines nachgeschalteten Belebungsbeckens. Ferner ist ein Rücklauf für geklärtes Wasser zur Förderpumpe vorhanden.

Die Verwendung einer Venturi-Düse als Injektor zur Lufteintragung vor einem Belüftungsturm ist aus der GB-A-2 077 712 bekannt.

Die DE-A-1 932 171 beschreibt einen Belüftungsturm mit einer zentralen, nach oben gerichteten Düse in Form einer Mammutpumpe, die durch einen Luftinjektor betrieben wird. Das aus der Düse ausströmende Abwasser wird über einen aerobischen Filter abgegeben. In diesem Filter wird der Abwasserstrom weiter verteilt.

Demgegenüber liegt der Erfindung die Aufgabe zugrunde, eine kompakte, kostengünstige und dabei auch bei Frost sicher arbeitende und einen hohen Reinigungsgrad bei der biologischen Nachklärung ermöglichende Belüftungsvorrichtung, einen Belüftungsturm für eine derartige Belüftungsvorrichtung sowie ein kostengünstiges und wirksames Verfahren zum Belüften von Abwasser bereitzustellen ; die Belüftungsvorrichtung und der Belüftungsturm sollen dabei sowohl für neue Abwasserreinigungsanlagen als auch zur Nachrüstung bestehender, rein mechanischer Anlagen geeignet sein.

Diese Aufgabe wird durch die Merkmale der Patentansprüche gelöst.

Die Erfindung geht dabei von dem Grundgedanken aus, die gesamte Anlage in eine Pumpvorrichtung mit Rücknahmevorrichtung, eine Abwasser-Luft-Mischvorrichtung mit einem Luftinjektor und einen oder mehrere Belüftungstürme aufzulösen ; durch diese Auflösung ist es möglich, die Pumpvorrichtung, die Abwasser-Luft-Mischvorrichtung und die Belüftungstürme jeweils als montagefertige Bauteile auszubilden, und es können sowohl neue Anlagen kompakt und kostengünstig geplant und errichtet werden als auch bestehende, rein mechanische Anlagen in biologische Kläranlagen umgebaut werden, wodurch der Reinigungsgrad erheblich verbessert wird.

Das in einem durchflossenen Faulraum vorgereinigte Abwasser wird in der vorzugsweise vorgefertigten Pumpvorrichtung, wie einem Pumpenschacht, mit vorzugsweise ebenfalls im Werk vorinstallierter Verdüsungspumpe durch eine Rohrleitung gedrückt. In der Abwasser-Luft-Mischvorrichtung wird mittels eines Injektors ein Abwasser-Luft-Gemisch erzeugt, welches dann dem Belüftungsturm zugeführt wird. In dem Belüftungsturm wird das Gemisch mittels einer vorzugsweise nach oben gerichteten Verdüsungsvorrichtung versprüht und kann dadurch Luftsauerstoff aufnehmen.

Die gesamte Anlage kann in montagefertigen Bauteilen geliefert werden, und die Pumpvorrichtung und der oder die Belüftungstürme brauchen nur auf den vorbereiteten Fundamenten verankert zu werden ; anschließend sind die Rohrleitungen nach den örtlichen Gegebenheiten zu verlegen. Durch die mögliche Vorfertigung der wesentlichen Bauteile werden gleichbleibende Qualitäten in der Ausführung gewährleistet. Die Facharbeiten werden in das Herstellerwerk verlegt, wo die Leistungen billiger als auf der Baustelle zu erbringen sind. Zudem wird wegen der geringen Baumassen, insbesondere auch der Belüftungstürme eine Verbilligung der Bauwerke erzielt. Die Bauzeit wird ebenfalls stark verkürzt, da nur Montagearbeiten anfallen. Durch Typenbauweise kann außerdem in Serie gefertigt werden. Durch die Unterteilung in mehrere Stufen kann insbesondere bei größeren Anlagen auch Energie gespart werden, da nur die erforderliche Verdüsungsmenge in Umlauf gebracht werden muß. Bestehende Anlagen lassen sich leicht umrüsten und durch eine biologische Stufe mit der erfindungsgemäßen Belüftungsvorrichtung ergänzen, da der relativ geringe Platzbedarf der erfindungsgemäßen Belüftungsvorrichtung bei Kläranlagen fast immer vorhanden ist oder zuerworben werden kann. Im Betrieb ist die gesamte Anlage aufgrund der möglichen selbstentleerenden Konstruktion aller wasserführenden Teile frostsicher.

Der erfindungsgemäße Belüftungsturm ist ebenfalls ein kleinvolumiges, vorfertigbares Bauteil mit geringer Baumasse, das betriebssicher und auch bei Stillstand frostsicher ist. In einer bevorzugten Ausführungsform werden mehrere derartige Belüftungstürme parallel geschaltet und können je nach Bedarf gemeinsam oder einzeln betrieben werden, wodurch eine hervorragende Anpassung an den Reinigungsbedarf möglich ist.

Im Belüftungsturm wird der von der Verdüsungsvorrichtung erzeugte Abwasser-Luft-Gemischstrahl vorzugsweise gegen eine oben angeordnete, gewölbte Prallplatte oder Verteilerscheibe gerichtet, von der die Tropfen auf einen als Platten-Tropfkörper ausgebildeten Intensiv-Verteiler fallen, der die Tropfen des Gemisches weiter verfeinert. Der Intensiv-Verteiler besteht vorzugsweise aus stehend angeordneten Kunststoff-Waben. Danach fallen die feinen Tropfen auf einen Spritzboden, indem sie von Stufe zu Stufe weiterverfeinert werden ; durch die Vergrößerung der gesamten Oberfläche der Tropfen ist eine Intensiv-Belüftung des Abwassers möglich. Die Tropfen werden schließlich in einem Ablauf aufgefangen.

Die erfindungsgemäße Belüftungsvorrichtung eignet sich insbesondere als Abwasserbelüfter zum Sauerstoffeintrag für die biologische Abwasserreinigung in Kläranlagen, die nach dem Prinzip der durchflossenen Faulräume arbeiten, insbesondere für kleine Sammelkläranlagen von ca. 100 bis 21.000 angeschlossenen Einwohnern oder Einwohnergleichwerten EGW. Die Belüftungsvorrichtung ist dabei zwischen die mechanische Vorklärstufe und die biologische Nachklärstufe geschaltet, wobei vorzugsweise eine Rückleitung von der biologischen Stufe zum Pumpwerk der Belüftungsvorrichtung vorgesehen ist, wodurch je nach Verschmutzungsgrad des Abwassers ein mehrfaches Durchlaufen der biologischen Stufe ermöglicht wird. Insbesondere um Selbstentleerung und Frostsicherheit zu gewährleisten, ist der Ablauf der biologischen Stufe vorzugsweise höher angeordnet als der Zulauf der Pumpvorrichtung. Um eine Überbelastung der Anlage zu verhindern, ist die Pumpleistung des Pumpwerks auf den maximalen Durchfluß bei Regenwetter abgestimmt.

Das erfindungsgemäße Verfahren zum Belüften von Abwasser ist insbesondere zur Durchführung mit der erfindungsgemäßen Belüftungsvorrichtung geeignet und zeichnet sich dadurch auch, daß das mechanisch vorgeklärte Abwasser zunächst von einer Pumpvorrichtung in eine Abwasser-Luft-Mischvorrichtung gepumpt wird, dort mittels eines Injektors mit Luft gemischt wird, das Gemisch einem Belüftungsturm zugeführt, dort verdüst und die erzeugten Tropfen schließlich immer feiner verteilt werden ; dadurch läßt sich auf kostengünstige und einfache Weise eine wirksame Sauerstoffanreicherung des Abwassers erzielen, das anschließend der biologischen Stufe zugeführt wird.

Die Erfindung wird nachstehend anhand der Zeichnungen näher erläutert. Es zeigen :

Fig. 1 den Grundriß der zwischen eine mechanische Vorklärstufe und eine biologische Nachklärstufe geschalteten, erfindungsgemäßen Belüftungsvorrichtung, und

Fig. 2 einen Schnitt der Vorrichtung gemäß Fig. 1.

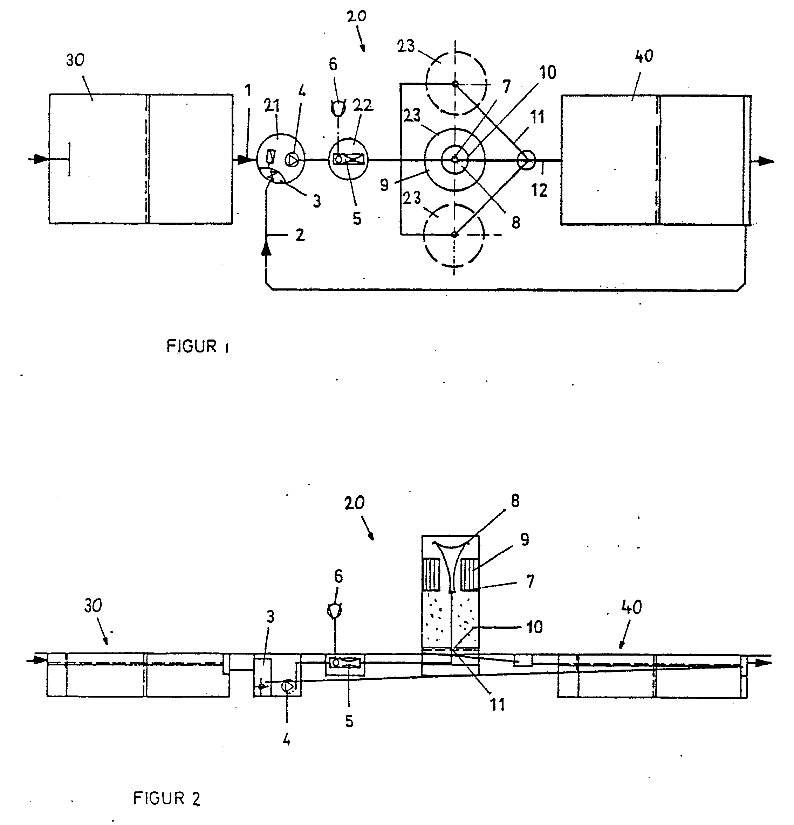

Fig. 1 zeigt eine Abwasserreinigungsanlage, bei der die erfindungsgemäße Belüftungsvorrichtung 20 mit Pumpvorrichtung 21, Abwasser-Luft-Mischvorrichtung 22 und drei parallel geschalteten Belüftungstürmen 23 zwischen eine mechanische Vorklärstufe 30 und eine biologische Nachklärstufe 40 geschaltet ist. Diese Abwasserreinigungsanlage kann durch nachträgliche Umrüstung einer rein mechanischen Abwasserreinigungsanlage, beispielsweise einer Erdbecken-Faulteichanlage einer kleinen Gemeinde, erstellt werden. Dabei wird der Ablauf 1 der mechanischen Stufe 30 in den Pumpenschacht der Pumpvorrichtung 21 geleitet. Im Pumpenschacht wird das mechanisch vorgeklärte Abwasser mit biologisch geklärtem Abwasser aus der biologischen Stufe vermischt, das über eine mit einem Schwimmerventil 3 abgeschlossene Rohrleitung 2 zugeführt wird. Das Mischungsverhältnis zwischen mechanisch vorgeklärtem und biologisch geklärtem Abwasser richtet sich beispielsweise nach dem Verschmutzungsgrad des Abwassers und beträgt vorzugsweise etwa 1 : 1. Eine Trennwand mit Rückflußverhinderer schließt den Rücklauf ab, falls bei Regenwetter ein größerer Zufluß als bei Trockenwetter auftritt.

Die Pumpenleistung der Pumpe 4 ist zur Sicherheit auf den maximalen Durchfluß bei Regenwetter abgestimmt; die im Herstellerwerk vorinstallierte Pumpe wird vom Wasserspiegel des Beckens der mechanischen Vorklärstufe 30 gesteuert.

Von der Pumpvorrichtung wird das Abwasser über eine Druckleitung zur ebenfalls montagefertigen bzw. vorgefertigten Abwasser-Luft-Mischvorrichtung 22 gedrückt. Die Abwasser-Luft-Mischvorrichtung 22 weist einen Injektor 5, vorzugsweise eine Laval-Düse oder ein Mischrohr auf. Der Injektor 5 saugt über eine Rohrleitung mit einem Kompressor 6 Luftblasen an. Abwasser und Luft werden im Verhältnis etwa 1 : 1 bis 1 : 2, besonders bevorzugt etwa im Verhältnis 1 : 1,5 gemischt. In der Abwasser-Luft-Mischvorrichtung 22 wird somit aus dem Abwasserstrahl ein Abwasser-Luft-Gemisch ausgebildet, das den drei parallel geschalteten Belüftungstürmen zugeführt wird. Jeder Belüftungsturm 23 weist eine Düse 7 auf, durch die das Abwasser-Luft-Gemisch zunächst relativ grobtropfig verdüst, an den oberen Prallteller 8 gespritzt und dann an den Intensiv-Belüfter oder Intensiv-Verteiler 9 geworfen wird. Jeder Prallteller 8 ist horizontal und vertikal verstellbar, um die Feinheit und Intensität der gebildeten Tropfen und die Wasserverteilung auf dem Intensiv-Verteiler 9 gezielt einstellen zu können. Der Intensiv-Verteiler 9 ist als Platten-Tropfkörper ausgebildet, auf dem der biologische Rasen ausgebildet wird. Der Platten-Tropfkörper weist stehend angeordnete Kunststoffwaben auf und ist zur Erzielung nitratarmen Abwassers hochbelastet. Die Waben des Intensiv-Verteilers 9 vertropfen das Abwasser in feinerer Form auf den perforierten Spritzboden 10, durch welchen das Abwasser in den Ablauf 11 jedes Belüftungsturmes 23 tropft. Über die Rohrleitung 12, die ebenso wie die Druckleitung von der Abwasser-Luft-Mischvorrichtung 22 für alle Belüftungstürme 23 gemeinsam ist, wird das Abwasser der biologischen Nachklärstufe 40 zugeführt. Der Ablauf der biologischen Nachklärstufe 40 liegt höher als der Zulauf über die Rohrleitung 2 zum Pumpenschacht der Pumpvorrichtung 21.

Die erfindungsgemäße Belüftungsvorrichtung 20 zum Sauerstoffeintrag in Abwasser bei der Abwasserreinigung ist auf kleinem Raum erstellbar und erzielt durch Verdüsen des Abwassers über einen als Platten-Tropfkörper ausgebildeten Intensiv-Verteiler 9 einen vorbestimmbaren Sauerstoffeintrag. Durch die Aufteilung der Anlage in eine Pumpvorrichtung 21, eine Abwasser-Luft-Mischvorrichtung 22 und einen oder mehrerer Belüftungstürme 23 sowie durch die Verdüsung des Abwassers insbesondere in den Belüftungstürmen 23 werden geringe Baumassen erzielt und die Belüftungsvorrichtung sowie die gesamte Abwasserreinigungsanlage dadurch kostengünstig hergestellt und unterhalten. Die Bauzeit beträgt nur wenige Wochen, da die einzelnen Teile des Bauwerkes und die Kunststoffwaben, vorzugsweise GFK-Waben, des Intensiv-Verteilers 9 vorgefertigt und rasch zu montieren sind. Die erfindungsgemäße Belüftungsvorrichtung 20 kann insbesondere zur Sanierung von nicht mehr leistungsfähigen Kläranlagen, zum Sauerstoffeintrag für eine dritte biologische Reinigungsstufe, zur Geruchsbekämpfung durch Belüftung, bei offenen Faulräumen oder zur Aufrüstung von sogenannten Erdbecken-Kläranlagen mit teilbiologischer Wirkung und bei biologischen Kläranlagen eingesetzt werden. Durch das Baukastenprinzip sind auch spätere Erweiterungen und Umrüstungen möglich, und die Abwasserreinigungsanlage kann dadurch laufend dem Bedarf angepaßt werden.

**Patentansprüche**

1. Belüftungsvorrichtung für die Abwasserreinigung, bei der eine Pumpvorrichtung (21), eine Abwasser-Luft-Mischvorrichtung (22) mindestens ein Belüftungsturm (23) und eine biologische Stufe hintereinander geschaltet und getrennt voneinander angeordnet sind, und mit einer Rückleitung (2) von der biologischen Stufe zur Pumpvorrichtung (21) zum Mischen von der Belüftungsvorrichtung (20) zugeführtem, mechanisch vorgeklärtem Abwasser mit biologisch geklärtem Abwasser aus der biologischen Stufe, dadurch gekennzeichnet, daß der Belüftungsturm (23) selbstentleerend ausgebildet ist.

2. Vorrichtung nach Anspruch 1, dadurch gekennzeichnet, daß die Pumpvorrichtung (21), die Abwasser-Luft-Mischvorrichtung (22) und der Belüftungsturm bzw. die Belüftungstürme (23) jeweils als montagefertige Bauteile ausgebildet sind.

3. Vorrichtung nach Anspruch 1 oder 2, dadurch gekennzeichnet, daß die Mischung in der Pumpvorrichtung (21) etwa im Verhältnis 1 : 1 erfolgt, wobei der Ablauf der biologischen Stufe vorzugsweise höher liegt als der Zulauf der Pumpvorrichtung (21).

4. Vorrichtung nach einem der Ansprüche 1 bis 3, dadurch gekennzeichnet, daß mehrere Belüftungstürme (23) parallel geschaltet sind.

5. Vorrichtung nach einem der Ansprüche 1 bis 4, dadurch gekennzeichnet, daß die Abwasser-Luft-Mischvorrichtung (22) einen Injektor (5) aufweist, der vorzugsweise als Laval-Düse ausgebildet ist.

6. Belüftungsturm zum Sauerstoffeintrag bei der Abwasserreinigung, insbesondere für eine Belüftungsvorrichtung nach einem der Ansprüche 1 bis 5, mit einem nach oben gerichteten Auslaß (7) zum Verteilen des Abwassers und einem nachgeschalteten Intensiv-Verteiler (9), dadurch gekennzeichnet, daß zur Verfeinerung der Tropfen des Gemisches der Auslaß als Düse (7) zum tropfenförmigen Versprühen eines Abwasser-Luft-Gemisches ausgebildet ist.

7. Belüftungsturm nach Anspruch 6, gekennzeichnet durch eine vorzugsweise einstellbare Prallplatte (8), die die von der Düse (7) auftreffenden Tropfen des Abwasser-Luft-Gemisches an den Intensiv-Verteiler (9) wirft.

8. Belüftungsturm nach Anspruch 6 oder 7, gekennzeichnet durch einen perforierten Spritzboden (10), auf den die Tropfen vom Intensiv-Verteiler (9) in feinerer Form vertropft werden, und durch einen die feineren Tropfen auffangenden Ablauf (11).

9. Belüftungsturm nach einem der Ansprüche 6 bis 8, dadurch gekennzeichnet, daß der Intensiv-Verteiler (9) als Platten-Tropfkörper ausgebildet ist, der vorzugsweise stehend angeordnete Kunststoffwaben aufweist.

10. Verfahren zum Belüften von Abwasser, insbesondere mit einer Vorrichtung nach einem der Ansprüche 1 bis 9, mit den folgenden Verfahrensschritten :

(a) Pumpen des aus einer mechanischen Vorklärstufe abfließenden Abwassers in eine Abwasser-Luft-Mischvorrichtung (22),

(b) Mischen des Abwassers in der Abwasser-Luft-Mischvorrichtung (22) mittels eines Injektors vorzugsweise im Verhältnis von etwa 1 : 1,5 mit Luft ;

(c) Zuführen des Abwasser-Luft-Gemisches zu mindestens einem Belüftungsturm (23), wobei

(d) der Strahl des Abwasser-Luft-Gemisches im Belüftungsturm (23) mittels einer nach oben gerichteten Düse (7) tropfenförmig versprüht wird ; und

(e) Feinverteilung der versprühten Tropfen, vorzugsweise mittels einer Prallplatte (8) und eines Intensiv-Verteilers (9).

## Claims

1. Aeration device for sewage purification with a pump device (21), a sewage-air-mixing device (22), at least one aeration tower (23) and a biological step being connected in series and arranged separately from each other and with a recirculating pipe (2) extending from the biological step to the pump device (21) for mixing the mechanically presettled sewage flowing from the aeration device (20) with biologically settled sewage from the biological step, characterized in that the aeration tower (23) is formed as a self-dumping tower.

2. Device according to claim 1, characterized in that the pump device (21), the sewage-air-mixing device (22) and the aeration tower(s) (23) are each formed as prefabricated parts ready for assembly.

3. Device according to claim 1 or 2, characterized in that the mixing in the pump device (21) is carried out approximately in the ratio of 1 : 1, with the outlet of the biological step being preferably situated on a higher level than the inlet of the pump device (21).

4. Device according to anyone of claims 1 to 3, characterized in that several aeration towers (23) are connected in parallel.

5. Device according to anyone of claims 1 to 4, characterized in that the sewage-air-mixing device (22) is provided with an injector (5) being preferably formed as a Laval nozzle.

6. Aeration tower for the inlet of oxygen in the sewage purification, in particular for an aeration device according to anyone of claims 1 to 5 with an outlet (7) pointed upwards for distributing the sewage and an intensive distributor (9) connected consecutively, characterized in that the outlet is provided as a valve (7) for refining the drops of the mixture in order to spray the sewage-air-mixture in the form of drops.

7. Aeration tower according to claim 6, characterized by a preferably adjustable baffle plate (8) emitting to the intensive distributor (9) the drops of the sewage-air-mixture that come from the nozzle (7) and impinge on said plate (8).

8. Aeration tower according to claim 6 or 7, characterized by a perforated spraying bottom (10) onto which the drops from the intensive distributor (9) are dropped in a finer form and by an outlet (11) collecting said finer drops.

9. Aeration tower according to anyone of claims 6 to 8, characterized in that the intensive distributor (9) is formed as a percolating filter being preferably provided with vertically arranged synthetic honeycombs.

10. Process for the aeration of sewage, in particular with a device according to anyone of claims 1 to 9 comprising one of the following process steps :

(a) pumping the sewage discharged from a mechanical presettling step into a sewage-air-mixing device (22),

(b) mixing the sewage with air in the sewage-air-mixing device (22) by means of an injector preferably in a ratio of approximately 1 : 1.5 ;

(c) conducting the sewage-air-mixture to at least one aeration tower (23), with

(d) the jet of the sewage-air-mixture being sprayed as drops in the aeration tower (23) by means of a nozzle (7) pointed upwards ; and

(e) fine distribution of the sprayed drops preferably by means of a baffle plate (8) and an intensive distributor (9).

## Revendications

1. Dispositif d'aération pour l'épuration des eaux usées, comprenant un dispositif de pompage (21), un dispositif de mélange-eaux usées-air (22), au moins une tour d'aération (23) et une phase biologique reliées l'une derrière l'autre et disposées séparément l'une de l'autre, et avec une conduite de retour (2) de la phase biologique au dispositif de pompage (21) pour mélanger des eaux usées préépurées mécaniquement venant du dispositif d'aération (20), avec de l'eau de la phase biologique épurée biologiquement caractérisée en ce que la tour d'aération (23) fonctionne par autodécharge.

2. Dispositif suivant la revendication 1, caractérisé en ce que le dispositif de pompe (21), le dispositif de mélange-eaux usées-air (22) et la tour d'aération ou les tours d'aération (23) forment des éléments prêts au montage.

3. Dispositif suivant la revendication 1 ou 2, caractérisé en ce que le mélange dans le dispositif de pompage (21) est effectué dans une relation d'environ 1 : 1, tandis que l'écoulement de la phase biologique est de préférence supérieur au remplissage du dispositif de pompage (21).

4. Dispositif suivant l'une des revendications de 1 à 3, caractérisé en ce que plusieurs tours d'aération (23) agissent parallèlement.

5. Dispositif suivant l'une des revendications de 1 à 4, caractérisé en ce que le dispositif de mélange-eaux usées-air (22) est muni d'un injecteur (5) formé de préférence par une tuyère de Laval.

6. Tour d'aération pour l'alimentation en oxygène concernant l'épuration des eaux usées en particulier dans un dispositif d'aération suivant l'une des revendications de 1 à 5 avec une évacuation (7) dirigée vers le haut pour la répartition des eaux usées, un distributeur intensif (9) relié consécutivement, caractérisé en ce que l'écoulement est formé en tuyère (7) pour vaporiser sous forme de gouttes un mélange-eaux usées-air afin d'affiner les gouttes du mélange.

7. Tour d'aération suivant la revendication 6, caractérisée par une surface de rebondissement (8) de préférence réglable, qui rejette les gouttes du mélange-eaux usées-air venant de la tuyère (7) vers le distributeur intensif (9).

8. Tour d'aération suivant la revendication 6 ou 7, caractérisée par un plateau gicleur perforé (10) sur lequel les gouttes venant du distributeur intensif (9) sont égouttées sous forme plus fine, et à travers un écoulement (11) recevant les gouttes plus fines.

9. Tour d'aération suivant l'une des revendications de 6 à 8, caractérisée en ce que le distributeur intensif (9) est formé par un lit bactérien à plaque qui présente des alvéoles de matière plastique disposées de préférence verticalement.

10. Procédé pour l'aération des eaux usées, avec en particulier un dispositif suivant l'une des revendications de 1 à 9 comprenant les étapes de traitement suivantes :

(a) pompage des eaux usées coulant d'une étape mécanique de préépuration dans un dispositif de mélange-eaux usées-air (22),

(b) mélange des eaux usées avec de l'air dans le dispositif de mélange-eaux usées-air (22) au moyen d'un injecteur de préférence dans une relation d'environ 1 : 1,5 ;

(c) écoulement du mélange-eaux usées-air dans au moins une tour d'aération (23), pendant que

(d) le jet du mélange-eaux usées-air dans la tour d'aération (23) est vaporisé sous forme de gouttes au moyen de la tuyère (7) dirigée vers le haut ; et

(e) distribution fine des gouttes vaporisées, de préférence au moyen d'une surface de rebondissement (8) et d'un distributeur intensif (9).

FIGUR 1

FIGUR 2